# EUROPEAN PATENT SPECIFICATION

(11) **EP 3 460 272 B1**
(45) Date of publication and mention of the grant of the patent: **01.04.2020**
(21) Application number: 17192095.2
(22) Date of filing: 20.09.2017
(51) Int. Cl.: F16C 35/02, F16C 39/02, F16C 41/04, F16C 17/03

(54) **METHOD FOR CHANGING A BEARING COMPONENT AND TOOL DEVICE FOR CHANGING A BEARING COMPONENT**
VERFAHREN ZUM WECHSELN EINES LAGERBAUTEILS UND WERKZEUGVORRICHTUNG ZUM WECHSELN EINES LAGERBAUTEILS
PROCÉDÉ POUR CHANGER UN COMPOSANT DE PALIER ET DISPOSITIF OUTIL PERMETTANT DE CHANGER UN COMPOSANT DE PALIER

(43) Date of publication of application: 27.03.2019
(73) Proprietor: Siemens Gamesa Renewable Energy A/S, 7330 Brande (DK)
(72) Inventor: Frydendal, Niels Karl, 7400 Herning (DK); Kanstrup, Troels, 8763 Rask Moelle (DK); Olesen, Dennis, 8200 Aarhus (DK); Thomsen, Kim, 9520 Skørping (DK); Thorhauge, Morten, 8200 Aarhus (DK)
(74) Representative: Aspacher, Karl-Georg

(56) References cited:
- EP-A1- 2 147 885
- EP-A2- 1 677 007
- US-A1- 2012 099 993
- US-A1- 2013 071 246
- US-A1- 2014 133 985

## Description

The invention relates to a method for changing a bearing component of a main bearing of a wind turbine, with the bearing component directly bearing a rotating shaft.

The increasing size of wind turbines and the trend towards offshore constructions puts high demands on serviceability and robustness especially of the main bearings of a wind turbine, which are used for directly bearing the rotating shaft. As especially these bearings are extremely loaded by large dynamic shaft deflections, high loads and low speeds these bearings quite often need maintenance.

Conventional roller bearings suffer from a very difficult replacement, as the drive train, the generator of the direct drive turbines and/or the hub with the blades need to be disassembled. This is only possible when using a crane or a vessel crane for carrying all the items which need to be disassembled and the bearing itself.

An alternative to using roller bearings is the use of radial fluid film bearings, which comprise a split bearing housing with a lower and an upper housing part. In this housing several separate bearing components are arranged in a ring form. They provide a fluid film on which the shaft extending through this fluid film bearing can slide. By removing the upper part of the bearing housing the radial bearing components can be changed in the radial direction of the shaft. The bearing components are lifted from the bearing housing by using a usual hoist and lifting equipment. The lower bearings are moved around the shaft for example by pulling them with steel wires until they are placed on the upper side of the shaft, where they can be removed. Also this kind of fluid film bearing requires some kind of dissembling and the replacement of just one bearing component, which needs to be changed, as it often requires the dissembling of other bearing components, when the broken bearing component is in a lower position, due to the removal of components in the radial direction.

From US 2012/0099993 A1 a method of performing maintenance on a wind turbine is known, which includes the steps of halting the rotation of the shaft, operating a lifting arrangement to raise the shaft, and removing a bearing pad of the wind turbine main bearing from the bearing housing of the wind turbine main bearing.

It is an object of the invention to provide an improved method for changing a bearing component.

For solving the problem the invention proposes a method for changing a bearing component of a main bearing of a wind turbine, with the bearing component directly bearing a rotating shaft, which method is characterised in that the bearing component being unloaded by mechanically moving the shaft is axially moved from or into its mounting position by means of a tool device according to claim 1.

According to the invention the respective bearing components are moved axially for removing them from the bearing housing or moving them into the bearing housing. This is possible, as the shaft is mechanically moved in order to unload the respective bearing component. For maintenance the shaft does not rotate. Due to the large mass of the hub and the blades, which mass is connected to the shaft, the front main bearing and the rear main bearing are loaded in opposite directions. While the front main bearing is loaded downwards, the rear main bearing is loaded upwards. The bearing components of the fluid film main bearings comprise a central component body which is used for providing and distributing the fluid for creating the fluid film. The component body is provided with a tilting pad, on which the shaft can rest when is not rotating. According to the invention the shaft is mechanically moved, in order to unload the respective bearing in order to create a small gap between the shaft and each individual radial bearing component of the fluid film main bearing. This is done by moving the shaft upwards or downwards, depending on the main bearing which needs maintenance. By unloading the respective main bearing or the respective bearing component it is possible to move the bearing component axially relative to the housing. For this axial movement parallel or along the shaft a respective replacement tool device is used, which simply needs to be coupled to the bearing component which needs to be replaced. By removing and replacing the radial bearing components in the axial direction of the shaft each radial bearing component can be replaced without removing another radial bearing components or disassembling the housing. There is also no need for providing a split housing, as the replacement can simply be done by axially moving the respective component.

This kind of replacement is especially possible, when the bearing is a hydrodynamic or hydrostatic bearing with the component having a component body comprising a tilting pad. This component body usually having a rectangular cross section, which is adapted to the cylindrical form of the shaft is a metal piece and comprises all necessary features or elements for guiding the fluid and for creating the fluid film. On a surface directed to the shaft a tilting pad is arranged on which the shaft can rest when it is not rotating respectively when maintenance is necessary.

As explained above the central feature is the unloading of the bearing components respectively the bearing by moving the shaft in order to create a small gap between the shaft and the respective bearing component. This movement can be done by using a jack pushing the shaft. This jack can be arranged between the shaft and a shaft housing or any other kind of counter bearing. The jack pushes the shaft either for lifting it when the bearing component which needs to be replaced is part of the front main bearing, or for lowering the shaft when the bearing component is part of the rear main bearing.

Another alternative to using a jack is the use of one or more slings wrapped around the shaft, which slings are used for pulling the shaft either upwards or downwards. Any kind of mechanical construction, which allows the respective movement of the shaft, is appropriate and useful.

According to another aspect of the invention the tool device is positioned in circumferential space between the shaft and a circumferential housing and is connected to the inner axial side of the bearing component. As already explained above the jack or the slings can be arranged in a space between the shaft and a shaft housing, which space is accessible through a service door. Also the replacement of the respective bearing components can be done within this space by positioning the tool device at the inner axial side of the bearing component. This allows pulling or pushing the respective bearing component out of the housing or into the housing from the circumferential space side.

As the bearing components are arranged in a ring form, and as sometimes several or all components need to be replaced, a simple way of positioning and connecting the tool to the respective bearing component, which can, as explained, be removed at their installation position, is desirable. For fulfilling this demand the tool is moved along a ring shaped rail guiding around the bearing and is positioned and fixed in the respective position in axial relation to the bearing component to be changed. The tool device used for performing the inventive method comprises a ring shaped rail guiding which is arranged at the fluid film main bearing. The tool itself can be moved along this rail guiding and can be positioned right in front of the component which needs to be changed. So the positioning of the tool is very simple, as it only needs to be pushed in the respective position, where it is fixed.

The tool itself can either be manually operated or by means of a motor actuating the moving mechanism of the tool. This means that the tool can either be manually operated for the replacement step, i.e. for actually moving the bearing component. It can also be manually operated for moving it along the rail guiding for positioning the tool in relation to the bearing component. Alternatively to the manual operation it is possible to use one or separate electric motors for performing the axial movement and/or the movement along the rail guiding.

Independent of how the tool is operated, the tool comprises a spindle with connection means for connecting the bearing component, with the spindle being axially moved when the tool is operated. The bearing component is pulled on or is pushed from a carrier table comprised by the tool. This allows a simple design of the tool and a very safe and precise working.

Beside the method the invention relates to a tool device for changing a bearing component, which tool device shall be used in the method as explained above. The tool device comprises the tool with a carrier table for taking the bearing component to be changed and a spindle with a connection means to be connected to the bearing component, while the spindle is movable axially by manual or motor driven operation for axially moving the bearing component from or into its mounting position.

The spindle is preferably arranged at least one bearing through which it is axially movable.

The spindle is, according to a first embodiment, axially movable by means of a manually rotatable hand wheel with a threaded bore, in which the threaded spindle is arranged, with the threaded bore forming the bearings in which the spindle is arranged. The hand wheel interacts with the threaded spindle. When the hand wheel rotates the spindle is axially moved along the carrier table.

In an alternative embodiment a motor is provided driving a drive wheel meshing with an interconnecting structure provided at the spindle. The motor for example drives a toothed wheel meshing with a tooth structure provided at the spindle. The motor can also drive a nut with a threaded bore meshing with the threaded spindle.

The connection means used for connecting the spindle to the bearing component comprises a connection plate which is to be attached to the bearing component by means of at least one connection element, especially a screw which is to be screwed in a threaded bore provided at the bearing component. This connection means allows a simple and firm connection of the spindle to the component allowing a safe axial movement.

The plate itself is preferably firmly fixed to the end of the spindle, so that there is a very rigid connection.

According to another aspect of the invention a ring shaped ring guiding is provided along which the tool is moveable and fixable. This ring shaped guiding is, as explained above, attached to the bearing housing and allows the tool to be brought in any desired position relative to the respective bearing component.

The rail guiding preferably comprises a first ring having a first diameter and a second ring having a smaller second diameter, while the tool comprises several wheels or sliding elements rolling or sliding on the rings. This design comprising the first and second ring allows a safe and stable movement of the tool.

Furthermore a fixation means can be provided for fixing the tool in a desired circumferential position at the rail guiding. This fixation means can be any kind of mechanical fixation like a clamping device or the like.

Additional details and advantages of the current invention can be taken from the following description of preferred embodiments in conjunction with the drawings, in which:
- Fig. 1: is a principle sketch showing a longitudinal cut view through the respective parts of a wind turbine showing the shaft and the respective front and rear main bearings,
- Fig. 2: is a principle sketch showing how to move the shaft for unloading the respective bearing,
- Fig. 3: is a principle sketch showing the replacement of a bearing component,
- Fig. 4: is a front view of the arrangement of fig. 3,
- Fig. 5: is a perspective view of an inventive tool device for replacing a bearing component,
- Fig. 6: is a principle sketch showing the tool device attached to the bearing housing in the shaft,
- Fig. 7: is a perspective view of the tool,
- Fig. 8: is a perspective elevated view of the spindle, and

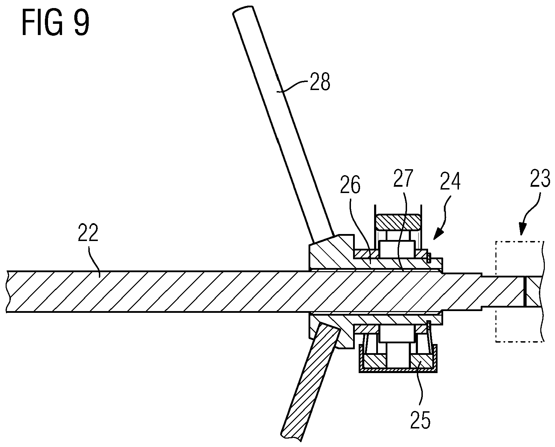

- Fig. 9: is a longitudinal cut through the spindle and the drive arrangement.

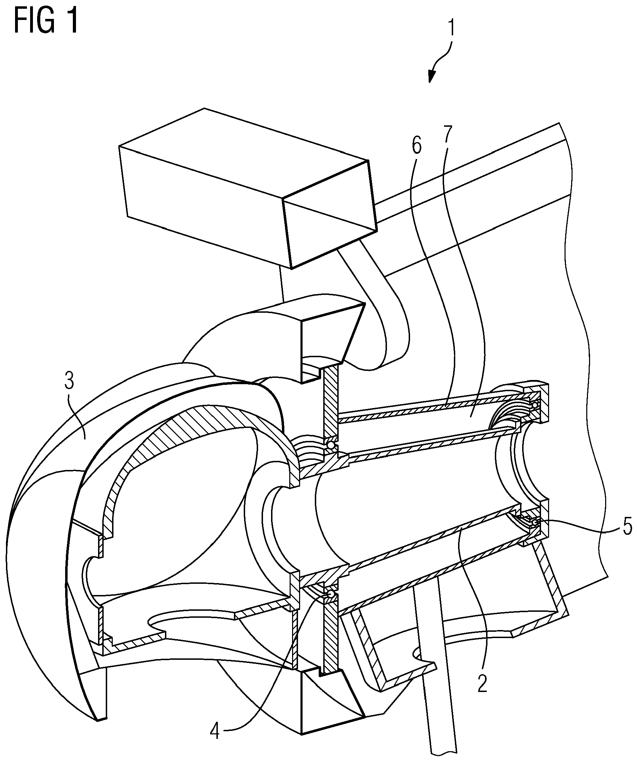

Fig. 1 shows a part of a wind turbine 1, comprising a shaft 2 coupled to a hub 3. The shaft is arranged in a front main bearing 4 and a rear main bearing 5, both of which are fluid film bearings.

The shaft is housed in a housing 6 with a space 7 being provided between the shaft 2 and the housing 6, into which access is possible through at least one service door. In this space respective means for actively mechanically lifting or lowering the shaft 2 for unloading the front main bearing 4 or the rear main bearing 5 are provided. Also a respective tool device for changing a bearing component of either the fluid film front main bearing 4 or the fluid film rear main bearing 5 is arranged in this space 7.

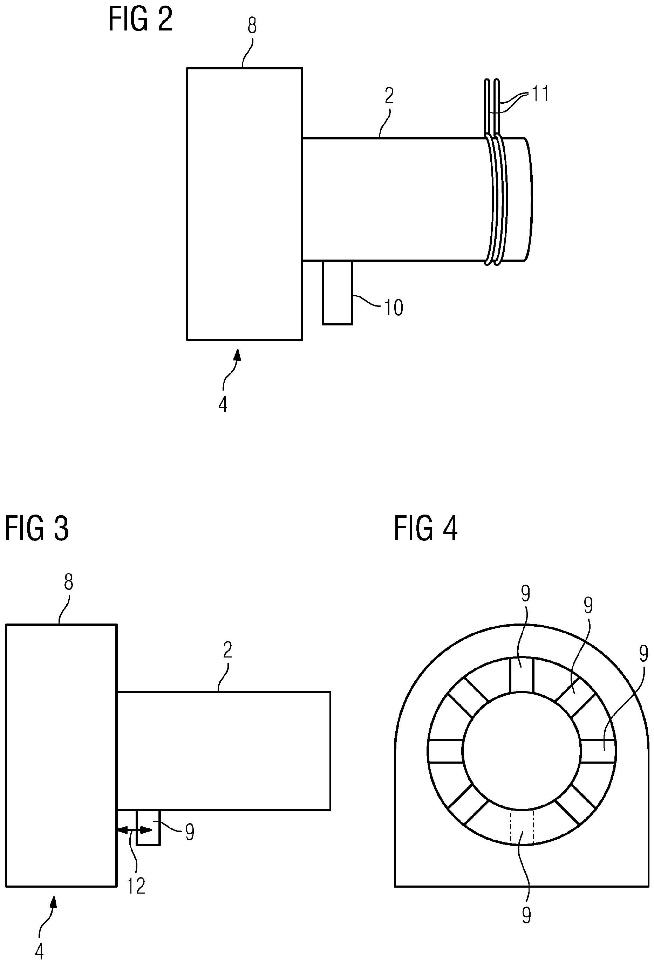

Fig. 2 shows a principle sketch of for example the front main bearing 4 comprising a one-piece bearing housing 8 in which, see for example fig. 4, several separate bearing components 9 which are used for the fluid film bearing of the shaft 2 are arranged. Due to the high load hanging at the shaft 2, which load is mainly realised by the hub 3 and the not shown blades arranged at the hub, the front main bearing 4 shown in fig. 2 is loaded by the shaft 2 which does not rotate when maintenance or service is performed. Certainly also the rear main bearing 5 is loaded in an opposite direction, while not shown in the figure. The shaft 2 rests on at least one, usually more of the respective bearing components arranged at the lower side of the main bearing 4. The bearing components 9 comprise respective tilting pads arranged at their upper side, on which the shaft 2 rests.

When it is necessary to remove a bearing component which may be under load it is necessary to lift the shaft 2 from its contact with the respective bearing components 9 in order to create a small gap between the shaft and the bearing components 9. This mechanical movement of the shaft 2 can either be performed by using at least one jack 10 positioned below the shaft 2 used for pushing it upwards. This jack 10 is installed in the space 7 closed to the main bearing 4 respectively the bearing housing. By operating this hydraulic or pneumatic jack 10 the shaft 2 can be pushed upwards just to create the small gap between the shaft 2 and the bearing components 9, which are then unloaded and can be removed in an axial direction as explained later.

Fig. 2 also shows an alternative way of lifting the shaft 2 using one or more slings 11 wrapped around the shaft 2. These slings are pulled upwards in order to lift the shaft 2 by means of a hoist or the like. Also this mechanical arrangement allows unloading the bearing components.

Fig. 3 and 4 show principle sketches of the inventive way of replacing a bearing component 9. Fig. 3 shows a situation comparable to fig. 2, with the shaft 2 being already lifted and with the respective bearing components 9 being unloaded. The bearing component 9 shown below the shaft 2 can now be axially moved, as shown by the arrow 12, in an axial direction parallel to the shaft 2. It can be moved out of the housing 8 or into the housing 8 by using a respective tool device which is explained later.

Fig. 4 shows the respective arrangement of fig. 3 from the front side, with the bearing component 9 which is to be replaced being shown by the dotted lines.

It is to be noted that the lifting action of the shafts 2 is only necessary when a bearing component 9 needs to be changed which is loaded. If for example the upmost bearing component 9 needs to be replaced no unloading action is necessary, as the bearing component 9 is already unloaded.

The opposite action is the case at the rear main bearing 5. This rear main bearing 5 is loaded in its upper part, as the shaft 2 tilts due to the high mass to which it is attached. When maintenance is to be performed at the rear main bearing 5 the shaft needs to be pushed downwards in order to unload the bearing components 9 in the upper part of the housing 8. Also this shaft movement can be performed by means of a jack 10 being installed above the shaft 2 for pushing it downwards or by means of slings 11 hanging from the shaft 2 being pulled downwards.

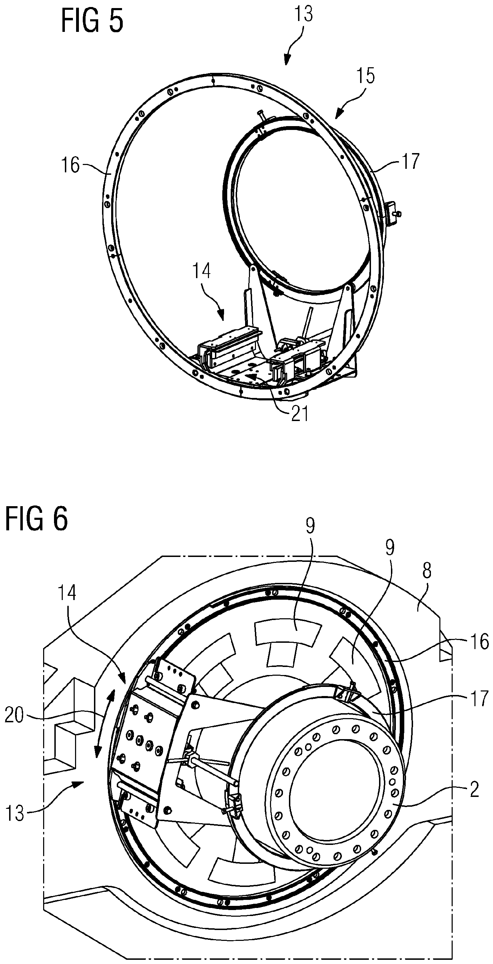

Fig. 5 shows an inventive tool device 13 which is used for axially moving a bearing component 9. This tool device 13 comprises the tool 14 and a rail guiding 15, along which the tool 14 is moveable. The rail guiding 15 comprises a first ring 16 which is to be fixed to the bearing housing 8 having a larger diameter than the second ring 17, which is axially spaced apart from the first ring 16 and which is attached to the shaft 2. The tool 14 comprises several rollers 18, 19 which are arranged in respective roller guidings at the respective ring 16, 17 allowing a movement of the tool 14 along the rail guiding 15.

This tool device 13 is attached to the bearing housing 8 by means of the ring 16 and to the shaft 2 by means of the ring 17 as shown in the principle sketch of fig. 6. Fig. 6 also shows in principle the respective bearing components 9 and the tool 14 which is arranged in an axial relation to the respective bearing component 9, and which can, as shown by the arrow 20, be moved in a connecting position relative to any of the bearing components 9 and fixed in the respective working position.

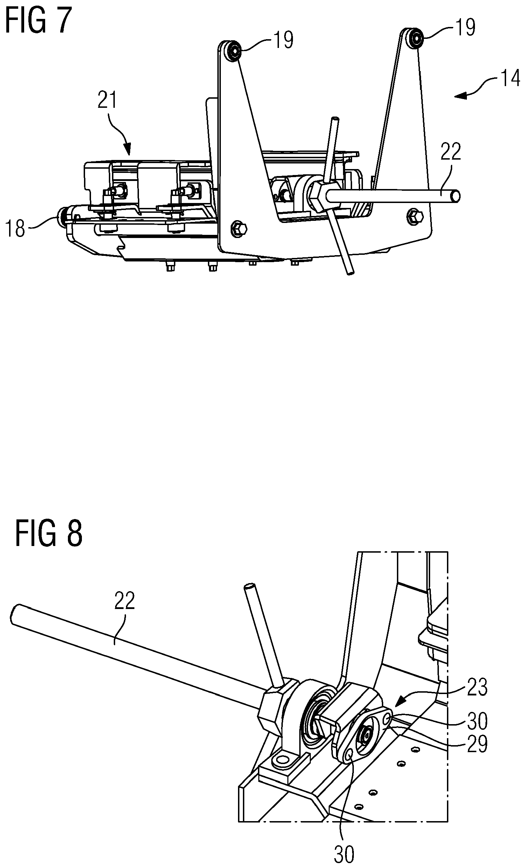

Figures 5 and 7 show several details of the tool 14. It comprises a carrier table 21 used for taking a bearing component 9. This bearing component 9 is either pulled out of the housing 8 or shall be pushed into the housing 8.

The tool 14 further comprises a threaded spindle 22 which is axially moveable along the carrier table 21, and which comprises a connection means 23 used for connecting the tool 14 to the bearing component. This connection means 23 is firmly attached to the spindle 22.

For moving the spindle 22 the spindle 22 is arranged in a bearing 24 comprising a bearing holder 25 into which a cylindrical part 26 with a threaded bore 27 is inserted. This cylindrical part 26 is part of a hand wheel 28. The threads of the bore 27 mesh with the threads of the spindle 22. As the hand wheel 28 is fixed in its axial position the spindle is pushed through the bearing 24 when the hand wheel 28 is rotated.

The connection means 23 comprises a connection plate 29 with as shown in the example two bores 30 in which respective screws are inserted, which are screwed into respective receiving bores provided at the component 9.

In operation, after the tool device 13 is installed at the bearing housing 8 respectively the shaft 2, the tool 14 is positioned in axial relation to the respective bearing component 9 which needs to be replaced. Depending on the position of this component movement of the shaft may be necessary. As already explained, when the component 9 is part of the front main bearing 4 and positioned in the lower half of the bearing housing 8, the shaft needs to be pushed upwards for unloading the respective bearing component. When the bearing component 9 is part of the rear main bearing 5 and is arranged in the upper part of the housing 8, the shaft 2 needs to be lowered for unloading the bearing components 9.

When the respective bearing component 9 is in an unloaded state, the connection means 23 respectively the connection plate 29 is firmly mounted to the bearing component 9 after it is attached to it by axially moving the spindle 22 by turning the hand wheel 28. When fixing the plate 29 to the bearing component 9 the hand wheel 28 is rotated in the opposite direction for moving the spindle 22 away from the bearing pulling the bearing component 9 out of the housing 8 and bringing it on the carrier table 21. When the bearing component 9 is completely pulled out of the housing 8 the bearing component 9 can be taken from the carrier table 21 after opening the connection of the plate 29 to the bearing component 9. A new bearing component 9 which shall be inserted in the housing 8 is then arranged at the carrier table 21 and is connected to the connection plate 29. Afterwards the hand wheel 28 is operated again in order to move the spindle 22 towards the housing, thereby pushing the bearing component 9 into the housing 8 for bringing it in its mounting position.

After performing this change the tool 14 is moved to the next position adjacent to a bearing component 9 which needs to be changed, if need be.

While the figures show a manual operation of the tool 14 by means of the hand wheel 28 it is also possible to have an motor driven movement of the spindle 22 by connecting the motor for example via a tooth wheel to the spindle 22.

Finally, the tool 14 can be moved along the rail guiding 13 manually or also by means of an electric motor.

Although the present invention has been described in detail with reference to the preferred embodiment, the present invention is not limited by the disclosed examples from which the skilled person is able to derive other variations without departing from the scope of the appended claims.

## Claims

1. Tool device for changing a bearing component, **characterised in that** the tool device (13) comprises a tool (14) with a carrier table (21) for taking the bearing component (9) to be changed and a spindle (22) with a connection means (23) to be connected to the bearing component (9), while the spindle (22) is moveable axially by manual or motor driven operation for axially moving the bearing component (9) from or into its mounting position.

2. Tool device according to claim 1, **characterised in that** the spindle (22) is arranged in at least one bearing (24) through which it is axially movable.

3. Tool device according to claim 2, **characterised in that** a manually rotatable hand wheel (28) with a threaded bore (27), in which the threaded spindle (22) is arranged, is provided, forming the at least one bearing (24) .

4. Tool device according to one of the preceding claims, **characterised in that** a motor is provided driving a drive wheel meshing with an interconnecting structure provided at the spindle (22).

5. Tool device according to one of the preceding claims, **characterised in that** the connection means (23) comprises a connection plate (29) which is to be attached to the bearing component (9) by means of at least one connection element, especially a screw to be screwed in a threaded bore provided at the bearing component (9).

6. Tool device according to claim 5, **characterized in that** the plate (29) is firmly fixed to the end of the spindle (22) .

7. Tool device according to one of the preceding claims, **characterised in that** a ring shaped rail guiding (15) is provided along which the tool (14) is movable and fixable.

8. Tool device according to claim 7, **characterized in that** the rail guiding (15) comprises a first ring (16) having a first diameter and a second ring (17) having a smaller second diameter, and that the tool (14) comprises several wheels (18, 19) or sliding elements rolling or sliding on the rings (16, 17).

9. Tool device according to claim 7 or 8, **characterized in that** a fixation means is provided for fixing the tool (14) in a desired circumferential position at the rail guiding (15).

10. Method for changing a bearing component of a main bearing of a wind turbine, with the bearing component directly bearing a rotating shaft, wherein the bearing component (9) being unloaded by mechanically moving the shaft (2) is axially moved from or into its mounting position by means of a tool device (13) according to one of the preceding claims.

11. Method according to claim 10, **characterised in that** as bearing component (9) a component body comprising a tilting pad of a hydrodynamic or hydrostatic bearing is moved.

12. Method according to claim 10 or 11, **characterised in that** the shaft (2) is moved by means of a jack (10) pushing the shaft (2), or by means of one or more slings (11) pulling the shaft (2).

13. Method according to one of the claims 10 to 12, **characterised in that** the tool device (13) is positioned in a circumferential space (7) between the shaft (2) and a circumferential housing (6) and is connected to the inner axial side of the bearing component (9).

14. Method according to one of the claims 10 to 13, **characterised in that** the tool (14) is moved along a ring shaped rail guiding (15) around the bearing and is positioned and fixed in the respective position in axial relation to the bearing component (9) to be changed.

15. Method according to one of the claims 10 to 14, **characterised in that** the tool (14) is manually operated or is operated by means of a motor actuating the moving mechanism of the tool (14).

16. Method according to one of the claims 10 to 15, **characterised in that** the bearing component (9) is pulled on or is pushed from the carrier table (21) comprised by the tool (14).

## Patentansprüche

1. Werkzeugvorrichtung zum Wechseln eines Lagerbauteils, **dadurch gekennzeichnet, dass** die Werkzeugvorrichtung (13) ein Werkzeug (14) mit einem Aufnahmetisch (21) zum Aufnehmen des zu wechselnden Lagerbauteils (9) und einer Spindel (22) mit einem mit dem Lagerbauteil (9) zu verbindenden Verbindungsmittel (23) umfasst, wobei sich die Spindel (22) durch manuellen oder motorbetriebenen Betrieb zum axialen Bewegen des Lagerbauteils (9) aus seiner oder in seine Montageposition axial verschieben lässt.

2. Werkzeugvorrichtung nach Anspruch 1, **dadurch gekennzeichnet, dass** die Spindel (22) in mindestens einem Lager (24) angeordnet ist, wodurch sie axial beweglich ist.

3. Werkzeugvorrichtung nach Anspruch 2, **dadurch gekennzeichnet, dass** ein manuell drehbares Handrad (28) mit einer Gewindebohrung (27), in der die Gewindespindel (22) angeordnet ist, vorgesehen ist und das mindestens eine Lager (24) bildet.

4. Werkzeugvorrichtung nach einem der vorhergehenden Ansprüche, **dadurch gekennzeichnet, dass** ein Motor vorgesehen ist, der ein Antriebsrad antreibt, das mit einer an der Spindel (22) vorgesehenen Verbindungskonstruktion in Eingriff steht.

5. Werkzeugvorrichtung nach einem der vorhergehenden Ansprüche, **dadurch gekennzeichnet, dass** das Verbindungsmittel (23) eine Verbindungsplatte (29) umfasst, die mithilfe mindestens eines Verbindungselements, insbesondere einer in eine an dem Lagerbauteil (9) vorgesehene Gewindebohrung einzuschraubende Schraube, an dem Lagerbauteil (9) angebracht werden soll.

6. Werkzeugvorrichtung nach Anspruch 5, **dadurch gekennzeichnet, dass** die Platte (29) fest an dem Ende der Spindel (22) fixiert ist.

7. Werkzeugvorrichtung nach einem der vorhergehenden Ansprüche, **dadurch gekennzeichnet, dass** eine ringförmige Schienenführung (15) vorgesehen ist, an der entlang sich das Werkzeug (14) bewegen und fixieren lässt.

8. Werkzeugvorrichtung nach Anspruch 7, **dadurch gekennzeichnet, dass** die Schienenführung (15) einen ersten Ring (16) mit einem ersten Durchmesser und einen zweiten Ring (17) mit einem kleineren, zweiten Durchmesser und das Werkzeug (14) mehrere Räder (18, 19) oder Gleitelemente umfasst, die auf den Ringen (16, 17) rollen oder gleiten.

9. Werkzeugvorrichtung nach Anspruch 7 oder 8, **dadurch gekennzeichnet, dass** ein Fixiermittel zum Fixieren des Werkzeugs (14) in einer gewünschten Umfangsposition an der Schienenführung (15) vorgesehen ist.

10. Verfahren zum Wechseln eines Lagerbauteils eines Hauptlagers einer Windenergieanlage, wobei direkt in dem Lagerbauteil eine rotierende Welle gelagert ist, wobei das durch mechanisches Bewegen der Welle (2) entlastete Lagerbauteil (9) mithilfe einer Werkzeugvorrichtung (13) nach einem der vorhergehenden Ansprüche axial aus seiner oder in seine Montageposition bewegt wird.

11. Verfahren nach Anspruch 10, **dadurch gekennzeichnet, dass** als Lagerbauteil (9) ein Bauteilkörper mit einem Kippsegment eines hydrodynamischen oder hydrostatischen Lagers bewegt wird.

12. Verfahren nach Anspruch 10 oder 11, **dadurch gekennzeichnet, dass** die Welle (2) mithilfe eines die Welle (2) schiebenden Hebers (10) oder mithilfe einer oder mehrerer die Welle (2) ziehender Schlingen (11) bewegt wird.

13. Verfahren nach einem der Ansprüche 10 bis 12, **dadurch gekennzeichnet, dass** die Werkzeugvorrichtung (13) in einem umlaufenden Raum (7) zwischen der Welle (2) und einem umlaufenden Gehäuse (6) positioniert und mit der axialen Innenseite des Lagerbauteils (9) verbunden wird.

14. Verfahren nach einem der Ansprüche 10 bis 13, **dadurch gekennzeichnet, dass** das Werkzeug (14) um das Lager herum eine ringförmige Schienenführung (15) entlang bewegt und positioniert und axial zu dem zu wechselnden Lagerbauteil (9) in der jeweiligen Position fixiert wird.

15. Verfahren nach einem der Ansprüche 10 bis 14, **dadurch gekennzeichnet, dass** das Werkzeug (14) manuell oder mithilfe eines Motors betätigt wird, der den Bewegungsmechanismus des Werkzeugs (14) antreibt.

16. Verfahren nach einem der Ansprüche 10 bis 15, **dadurch gekennzeichnet, dass** das Lagerbauteil (9) auf den zu dem Werkzeug (14) gehörenden Aufnahmetisch (21) gezogen oder von diesem heruntergeschoben wird.

## Revendications

1. Dispositif à outil pour changer un composant de palier, **caractérisé en ce que** le dispositif à outil (13) comprend un outil (14) avec une table de support (21) pour prendre le composant de palier (9) à changer et une broche (22) avec un moyen de liaison (23) à relier au composant de palier (9), tandis que la broche (22) est mobile axialement par un actionnement manuel ou motorisé pour déplacer axialement le composant de palier (9) depuis ou dans sa position de montage.

2. Dispositif à outil selon la revendication 1, **caractérisé en ce que** la broche (22) est agencée dans au moins un palier (24) à travers lequel elle est axialement mobile.

3. Dispositif à outil selon la revendication 2, **caractérisé en ce qu'**un volant pouvant être tourné manuellement (28) muni d'un alésage fileté (27), dans lequel est agencée la broche filetée (22), est prévu, formant l'au moins un palier (24).

4. Dispositif à outil selon l'une des revendications précédentes, **caractérisé en ce qu'**un moteur qui entraîne une roue d'entraînement s'engrenant avec une structure d'interconnexion prévue au niveau de la broche (22) est prévu.

5. Dispositif à outil selon l'une des revendications précédentes, **caractérisé en ce que** le moyen de liaison (23) comprend une plaque de liaison (29) qui est destinée à être attachée au composant de palier (9) au moyen d'au moins un élément de liaison, en particulier une vis à visser dans un alésage fileté prévu au niveau du composant de palier (9).

6. Dispositif à outil selon la revendication 5, **caractérisé en ce que** la plaque (29) est fermement fixée à l'extrémité de la broche (22).

7. Dispositif à outil selon l'une des revendications précédentes, **caractérisé en ce qu'**un guide de rail en forme de bague (15) est prévu le long duquel l'outil (14) est mobile et peut être fixé.

8. Dispositif à outil selon la revendication 7, **caractérisé en ce que** le guide de rail (15) comprend une première bague (16) ayant un premier diamètre et une deuxième bague (17) ayant un deuxième diamètre plus petit, et **en ce que** l'outil (14) comprend plusieurs roues (18, 19) ou éléments coulissants roulant ou coulissant sur les bagues (16, 17).

9. Dispositif à outil selon la revendication 7 ou 8, **caractérisé en ce qu'**un moyen de fixation est prévu pour fixer l'outil (14) dans une position circonférentielle souhaitée au niveau du guide de rail (15).

10. Procédé de changement d'un composant de palier d'un palier principal d'une éolienne, avec le composant de palier portant directement un arbre rotatif, dans lequel le composant de palier (9) qui est déchargé par déplacement mécanique de l'arbre (2) est déplacé axialement depuis ou dans sa position de montage au moyen d'un dispositif à outil (13) selon l'une des revendications précédentes.

11. Procédé selon la revendication 10, **caractérisé en ce que**, en tant que composant de palier (9), un corps de composant comprenant un patin d'inclinaison d'un palier hydrodynamique ou hydrostatique est déplacé.

12. Procédé selon la revendication 10 ou 11, **caractérisé en ce que** l'arbre (2) est déplacé au moyen d'un vérin (10) poussant l'arbre (2), ou au moyen d'une ou de plusieurs élingue(s) (11) tirant l'arbre (2).

13. Procédé selon l'une des revendications 10 à 12, **caractérisé en ce que** le dispositif à outil (13) est positionné dans un espace circonférentiel (7) entre l'arbre (2) et un boîtier circonférentiel (6) et est relié au côté axial interne du composant de palier (9).

14. Procédé selon l'une des revendications 10 à 13, **caractérisé en ce que** l'outil (14) est déplacé le long d'un guide de rail en forme de bague (15) autour du palier et est positionné et fixé dans la position respective en relation axiale avec le composant de palier (9) à changer.

15. Procédé selon l'une des revendications 10 à 14, **caractérisé en ce que** l'outil (14) est actionné manuellement ou est actionné au moyen d'un moteur activant le mécanisme de déplacement de l'outil (14).

16. Procédé selon l'une des revendications 10 à 15, **caractérisé en ce que** le composant de palier (9) est tiré sur la table de support (21) comprise dans l'outil (14) ou est poussé à partir de celle-ci.
